Europäisches Patentamt

European Patent Office

Office européen des brevets

(11) Veröffentlichungsnummer: **0 216 046 B1**

## (12) EUROPÄISCHE PATENTSCHRIFT

(45) Veröffentlichungstag der Patentschrift: **12.02.92**

(21) Anmeldenummer: **86109740.0**

(22) Anmeldetag: **16.07.86**

(51) Int. Cl.⁵: **B41F 21/04**

---

(54) **Kupplung in einer Bogenrotationsdruckmaschine.**

---

(30) Priorität: **27.09.85 DE 3534486**

(43) Veröffentlichungstag der Anmeldung:
**01.04.87 Patentblatt 87/14**

(45) Bekanntmachung des Hinweises auf die
Patenterteilung:
**12.02.92 Patentblatt 92/07**

(84) Benannte Vertragsstaaten:
**DE FR GB IT SE**

(56) Entgegenhaltungen:
**GB-A- 2 142 908**
**US-A- 4 444 106**
**US-A- 4 457 231**

**PATENT ABSTRACTS OF JAPAN, Band 7, Nr.**
**165 (M-230)[1310], 20. Juli 1983; JP-A-58 71**
**162 (KOMORI INSATSU KIKAI K.K.) 27-04-1983**

**PATENT ABSTRACTS OF JAPAN, Band 7, Nr.**
**177 (M-233)[1322], 5. August 1983; JP-A-58 78**
**763 (KOMORI INSATSU KIKAI K.K.) 12-05-1985**

(73) Patentinhaber: **Koenig & Bauer Aktiengesell-**
**schaft**
**Friedrich-Koenig-Strasse 4 Postfach 60 60**
**W-8700 Würzburg 1(DE)**

(72) Erfinder: **Wieland, Erich Georg**
**Mittlerer Dallenbergweg 52**
**W-8700 Würzburg(DE)**
Erfinder: **Spiess, Wolfgang Carlo Johannes**
**Altenberg 15**
**W-8700 Würzburg 26(DE)**

EP 0 216 046 B1

**Beschreibung**

Die Erfindung betrifft einen Antrieb für eine Trommel oder einen Zylinder einer Bogenrotationsdruckmaschine gemäß dem Oberbegriff des Patentanspruchs 1.

Druckölverbände sind z. B. durch die Schrift "Druckölverband" (1977) der Firma SKF Kugellagerfabriken GmbH bekannt.

Bei von Schön- auf Schön- und Widerdruck umstellbaren und auf verschiedene Formate einstellbaren Bogenrotationsdruckmaschinen ist eine Einstelleinrichtung bei Bogenübergabetrommeln erforderlich, mit der Bogentransporteinrichtungen, wie z.B. Greifer, auf verschiedene Papierformate und Betriebsarten der Druckmaschine eingestellt werden können. So zeigt z.B. das GB-A-2 142 908 eine derartige Einrichtung, die ein mit einem Bund versehenes Zahnrad aufweist, auf dem ein Zahnkranz angebracht ist. Dieser Zahnkranz wird durch Klemmklauen axial an das Zahnrad angepreßt. Die Klemmklauen drücken durch Federn über zweiarmige Hebel an eine Seite des Zahnkranzes. Durch Betätigen eines Hydraulikkolbens gegen die Federkraft wird die Klemmwirkung der Klemmklauen aufgehoben.

Der Erfindung liegt die Aufgabe zugrunde, einen als schaltbare Kupplung verwendbaren Antrieb für eine Trommel einer von Schön- auf Schön- und Widerdruck umschaltbaren Bogenrotationsdruckmaschine zu schaffen.

Die Vorteile der Erfindung liegen insbesondere darin, daß ein Lösen der Kupplung ohne Betätigung von Verbindungsmaschinenelementen möglich ist. In besonders vorteilhafter Weise wird im getrennten Zustand der Kupplung eine gleichmäßige Verspannung der Bauteile erreicht. Es sind keinerlei verschleißanfällige Hebel notwendig. Die Kupplung ist einfach, schnell und sicher zu bedienen und ist ein hervorragendes Bauteil für eine automatische Formatumstelleinrichtung, bei einer von Schön- auf Widerdruck umschaltbaren formatvariablen Bogenrotationsdruckmaschine. Sie ermöglicht damit eine wesentliche Senkung der Rüstzeit beider Umstellung der Maschine. Die Kupplung benötigt keinen zusätzlichen Einbauraum und kann sehr hohe Kräfte übertragen. Die Kupplung eignet sich besonders gut als Kupplung zwischen zwei zueinander in Umfangsrichtung verstellbaren Trägereinrichtungen auf einer Bogenübergabetrommel einer auf Schön- und Widerdruck umstellbaren Bogenrotationsdruckmaschine, bei der die erste Trägereinrichtung mit steuerbaren Greifern zur Erfassung des Bogenanfangs und die zweite Trägereinrichtung mit einer steuerbaren Halteeinrichtung für das Bogenende ausgerüstet ist.

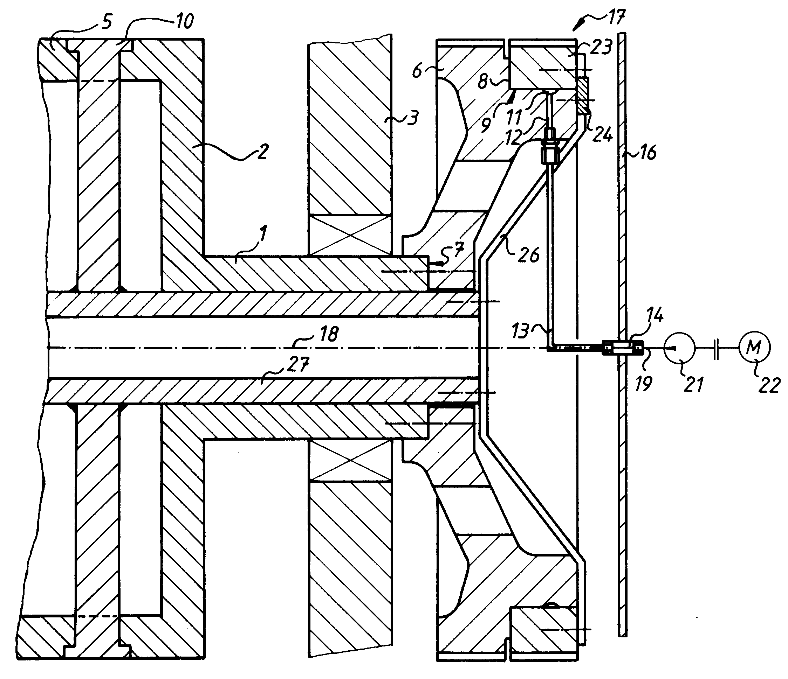

Ein Ausführungsbeispiel der Erfindung ist in der Zeichnung dargestellt und wird im folgenden näher beschrieben.

Die Figur zeigt eine Seitenansicht einer Ausführung der erfindungsgemäßen Kupplung im Schnitt.

Beide Hohlzapfen 1 eines Bogenübergabetrommelkörpers 2 einer Bogenübergabetrommel sind in Seitengestellen 3 gelagert. Auf einem Hohlzapfen 1 ist ein Zahnrad 6 aufgepaßt und an einer Stirnseite 7 des Hohlzapfens 1 angeschraubt. Das Zahnrad 6 weist einen außenliegenden Bund 8 mit einer zylindrischen oder konischen Paßfläche 9 auf. In die Paßfläche 9 ist eine sich um den gesamten Umfang mittig erstreckende Ölverteilungsnut 11 eingearbeitet. In die Ölverteilungsnut 11 mündet eine den Bund 8 durchdringende Ölversorgungsbohrung 12. Die Ölversorgungsbohrung 12 ist an ein Hydraulikrohr 13 angeschlossen, das in eine Dreheinführung 14 mündet. Die Dreheinführung 14 ist in einem Deckel 16 eines am Seitengestell 3 befestigten Räderkastens 17 gelagert, wobei die Zentren von Hohlzapfen 1 und Dreheinführung 14 auf der gleichen Geraden 18 liegen. Die Dreheinführung 14 ist über ihren zweiten Anschluß und ein Rohr 19 mit einer Hydraulikpumpe 21 verbunden, die von einem Elektromotor 22 angetrieben wird.

Die Bogenübergabetrommel 2 besteht in bekannter Weise aus jeweils einer Mehrzahl von gegenüber eines Trommelkörpers 5 verschiebbaren Tragsegmenten 10. Der Trommelkörper 5 ist über einen Hohlzapfen 1 mit dem Zahnrad 6 und die Tragsegmente 10 mit der Welle 27 formschlüssig verbunden. An dem Trommelkörper 5 sind in bekannter Weise eine Greiferauflage befestigt und eine Greiferspindel mit den Greifern gelagert.

Auf den Bund 8 des Zahnrades 6 ist ein Zahnkranz 23 aufgeschrumpft. Eine Mehrzahl von Begrenzungsstücken 24, die über den Umfang des Bundes 8 hinausragen, sind seitlich am Bund 8 angeschraubt. Sie sollen eine axiale Verschiebung des aufgeweiteten Zahnkranzes 23 verhindern. Der Zahnkranz 23 ist mittels einer Mehrzahl von Stegen 26 mit einer Welle 27, die in dem Hohlzapfen 1 drehbar gelagert ist, verbunden. Mit der Welle 27, und durch Aussparungen im hohlen Trommelkörper 5 hindurchgreifend, ist ein Tragsegement 10 zur Aufnahme einer an sich bekannten mit Unterdruck beaufschlagbaren Halteleiste zum Festhalten des Bogenendes angeordnet.

Zum Lösen des Zahnkranzes 23 vom Bund 8 des Zahnrades 6 wird mittels der Hydraulikpumpe 21 durch die Rohre 13, 19, die Dreheinführung 14 und die Ölversorgungsbohrung 12 hindurch in die durch den Zahnkranz 23 abgedeckte Ölverteilungsnut 11 Hydrauliköl mit ca. 150-200 bar gedrückt.

Das Hydrauliköl gelangt zwischen die Paßflächen 9 von Bund 8 und Zahnkranz 23 und bildet einen trennenden Ölfilm zwischen ihnen, so daß der Zahnkranz 23 auf dem Bund 8 in Umfangsrichtung verdreht werden kann.

Soll der Reibschluß zwischen Zahnkranz 23 und Zahnrad 6 (Bund 8), wieder hergestellt werden, wird die Verbindung zwischen Hydraulikpumpe 21 und Ölverteilungsnut 11 drucklos gemacht.

Zahnrad 6 und Zahnkranz 23 liegen in einem Zahnräderzug zwischen zwei Druckwerken der Bogenrotationsdruckmaschine. Wird nun die Schrumpfverbindung zwischen Zahnrad 6 und Zahnkranz 23, wie oben beschrieben, aufgehoben, und ein Druckwerk festgesetzt, so kann mittels eines Antriebes das zweite Druckwerk zum ersten um eine vorwählbare Winkellage gedreht werden, was an sich bekannt ist. Zwar sind Greiferreihe und die mit Unterdruck beaufschlagbare Halteleiste auf der gleichen Übergabetrommel 2 montiert, jedoch folgt die Greiferreihe (Bogenanfang) der Bewegung des Zahnrades 6 und damit dem zweiten Druckwerk und der Zahnkranz 23 und damit die Halteleiste (Bogenende) der Bewegung des ersten Druckwerkes.

Teileliste

| | |
|---|---|
| 1 | Hohlzapfen |
| 2 | Bogenübergabetrommel |
| 3 | Seitengestell |
| 4 | - |
| 5 | Trommelkörper |
| 6 | Zahnrad |
| 7 | Stirnseite |
| 8 | Bund |
| 9 | Paßfläche |
| 10 | Tragsegmente |
| 11 | Ölverteilungsnut |
| 12 | Ölversorgungsbohrung |
| 13 | Hydraulikrohr |
| 14 | Dreheinführung |
| 15 | - |
| 16 | Deckel |
| 17 | Räderkasten |
| 18 | Gerade |
| 19 | Rohr |
| 20 | - |
| 21 | Hydraulikpumpe |
| 22 | Elektromotor |
| 23 | Zahnkranz |
| 24 | Begrenzungsstücke |
| 25 | - |
| 26 | Steg |
| 27 | Welle |

**Patentansprüche**

1. Antrieb für eine Trommel oder einen Zylinder einer Bogenrotationsdruckmaschine für Schön- und Widerdruck bei dem zwei nebeneinander angeordnete Zahnräder und eine fernschaltbare, hydraulisch betätigbare Einrichtung vorgesehen sind, um zeitweise eine Verbindung zwischen dem einen Zahnrad und der Trommel bzw. dem Zylinder zu lösen, um das eine Zahnrad gegenüber dem anderen Zahnrad zu verdrehen, wobei das eine Zahnrad einen Bund aufweist, auf dem das zweite Zahnrad als Zahnkranz angebracht ist, dadurch gekennzeichnet, daß die hydraulisch betätigbare Einrichtung als auf einer Paßfläche (9) des Bundes (8) mittels Schrumpfsitz festsitzender Zahnkranz (23) ausgeführt ist, daß Mittel (11, 12, 21) vorgesehen sind, um Drucköl zwischen die Paßflächen (9) des Bundes (8) und des Zahnkranzes (23) zu pressen.

2. Antrieb nach Anspruch 1, dadurch gekennzeichnet, daß der Zahnkranz (23) ein Außenteil und der Bund (8) des Zahnrades (6) ein Innenteil eines mittels Drucköl lösbaren Preßverbandes bilden, daß in einer Paßfläche (9) des Zahnrades (6) eine Ölverteilungsnut (11) eingearbeitet ist, daß die Ölverteilungsnut (11) mit einer schaltbaren Druckölquelle (21) verbunden ist.

**Claims**

1. Drive for a drum or a cylinder of a sheet-fed rotary printing machine for first printing and second printing, in which two toothed wheels arranged next to one another and a remote-controllable hydraulically activatable device are provided in order to temporarily release a connection between one toothed wheel and the drum or the cylinder, in order to rotate one toothed wheel with respect to the other toothed wheel, one toothed wheel having a collar on which the second toothed wheel is mounted as a toothed ring, characterized in that the hydraulically activatable device is constructed as a toothed ring seated securely on a fitting surface (9) of the collar (8) by means or shrink fitting, and in that means (11, 12, 21) are provided in order to press pressurized oil between the fitting surfaces (9) of the collar (8) and of the toothed ring (23).

2. Drive according to Claim 1, characterized in that the toothed ring (23) forms an outer part and the collar (8) of the toothed wheel (6) forms an inner part of a pressure join which may be released by means of pressurized oil, in that in a fitting surface (9) of the toothed wheel (6) an oil distribution groove (11) is made, and in that the oil distribution groove (11) is connected to a switch-controllable pressure oil source (21).

**Revendications**

1. Entraînement d'un tambour ou d'un cylindre d'une rotative d'impression de feuilles pour impression recto et verso, dans lequel deux roues dentées, disposées l'une à côté de l'autre et un dispositif actionnable hydrauliquement, susceptible d'être mis en service à distance, sont prévus, pour désolidariser temporairement une liaison, entre l'une des roues dentées et le tambour, respectivement le cylindre, pour faire tourner la première roue dentée par rapport à la seconde, la première roue dentée présentant une collerette, sur laquelle est montée la seconde roue dentée, sous forme de couronne dentée, caractérisé en ce que le dispositif actionnable hydrauliquement est réalisé sous forme d'une couronne dentée (23), bloquée grâce à un ajustement fretté, sur une surface d'ajustement (9) de la collerette, en ce que des moyens (11,12,21) sont prévus pour presser de l'huile sous pression entre les surfaces de contact (9) de la collerette (8) et de la couronne dentée (23).

2. Entraînement selon la revendication 1, caractérisé en ce que la couronne dentée (23) forme une partie extérieure et la collerette (8) de la roue dentée (6) forme une partie intérieure, d'un assemblage susceptible d'être désolidarisé au moyen d'huile sous pression, en ce qu'une gorge de distribution d'huile (11) est usinée dans une surface de contact (9) de la roue dentée (6), en ce que la gorge de distribution d'huile (11) est reliée à une source d'huile sous pression (21) susceptible d'être mise en action.